# EUROPÄISCHE PATENTSCHRIFT

(11) **EP 1 987 931 B1**
(45) Veröffentlichungstag und Bekanntmachung des Hinweises auf die Patenterteilung: **08.06.2011**
(21) Anmeldenummer: 08152359.9
(22) Anmeldetag: 06.03.2008
(51) Int. Cl.: B29C 31/00, B29C 53/82, B29D 23/00

(54) **Dornanschlussaggregat**
Bolt connector motor
Agrégat de raccordement de broche

(30) Priorität: 04.05.2007 DE 102007021372
(43) Veröffentlichungstag der Anmeldung: 05.11.2008
(73) Patentinhaber: ContiTech Luftfedersysteme GmbH, 30165 Hannover (DE)
(72) Erfinder: Kranz, Harald, 31008 Elze (DE)
(74) Vertreter: Finger, Karsten

(56) Entgegenhaltungen:
- DE-A1- 2 545 058
- DE-A1- 2 906 177
- DE-C1- 10 229 073
- US-A- 4 867 824

## Beschreibung

Die Erfindung betrifft ein Domanschlussaggregat zum Anschluss einer Folge von fortlaufenden rohrförmigen Domen für eine Einrichtung zum Herstellen schlauchförmiger Gebilde durch Extrusion auf den Domen.

Bei der Fertigung schlauchförmiger Gebilde werden oftmals rohrförmige Dorne mit einem Durchmesser der herzustellenden Gebilde genutzt, auf die eine oder mehrere Gummischichten aufextrudiert werden, während die Dorne in eine Förderrichtung durch eine Fertigungsstraße bestehend aus einem oder mehreren hintereinander angeordneten Extrudern befördert werden. Auf einzelne Gummischichten können gegebenenfalls Verstärkungsgewebe aufgebracht werden, beispielsweise in dem während des Durchlaufens der Dorne Fäden auf eine Gummischicht aufspiralisiert werden. Dieses Verstärkungsgewebe wird dann in der Regel mit einer weiteren Materialschicht abgedeckt.

Eine solche Fertigung erfordert, dass die Extruder kontinuierlich arbeiten, um Materialschwankungen der Materialschichten zu vermeiden. Hierzu wird eine Folge von Domen hintereinander in die Fertigungsstraße geschickt. Das Problem hierbei besteht in dem Ankoppeln der aufeinander folgenden Dorne aneinander. Diese haben hierzu eine entsprechende Rastkopplung, durch die aufeinander folgende Dorne durch Einstecken und Verdrehen von korrespondierenden Kupplungsteilen der Rastkupplung fest miteinander verrasten.

Ein derartiges Fertigungsverfahren ist beispielsweise in der DE 102 29 081 A1 beschrieben.

Ein anderes Verfahren ist in der DE 29 06 177 A1 offenbart, bei dem ein erster Führungsdom mit abgerundeter Spitze und ein zweiter Führungsdom vorgesehen ist, der in eine zylindrische Sackbohrung des ersten Führungsdoms eingereift. Die zylindrische Sackbohrung dient als Zentrierbohrung. Ein bereits hergestellter Schlauch wird über den ersten Führungsdom gezogen, von dort verlängert und von dort über den zweiten Führungsdom gezogen. Anschließend wird der auf dem zweiten Führungsdom befindliche Schlauchabschnitt abgetrennt.

Auch aus DE 43 04 246 A1 ist ein Verfahren zur Herstellung eines Schlauches durch Extrusion einer Seele über einem Dorn offenbart.

US 3,128,216 offenbart eine Vorrichtung zur kontinuierlichen Herstellung von Schläuchen auf Domen. Die Dornkupplung ist hierbei durch einen Vierkantzapfen ausgebildet, der in eine Vierkantbohrung in der Stoßstelle einer angrenzenden Domes eingesteckt wird.

Eine andere Art der Dornkupplung ist in DE 25 45 058 A1 beschrieben die eine Vorrichtung gemäß dem Oberbegriff des Anspruchs 1 offenbart. Es wird dort vorgeschlagen, die Dorne mit einer über eine Stange aufklappbaren Haltevorrichtung miteinander zu verrasten.

Bei diesen bekannten Vorrichtungen besteht das Problem, dass beim Ankoppeln eines Domes an die bereits in der Fertigungslinie befindlichen Folge von Domen ein Stoß auf diese Dorne ausgeübt wird. Dies führt zu ungleichmäßigen Schichtdicken beim Aufextrudieren der Schichten bzw. zu ungleichmäßiger Wicklung des Fasergeleges zum Zeitpunkt des Stoßes.

Aufgabe der Erfindung ist es daher, ein Domanschlussaggregat zum Anschluss einer Folge von fortlaufenden Domen zu schaffen, durch das eine Einwirkung auf die bereits im Fertigungsprozess befindlichen Dorne vermieden wird, wenn ein nachfolgender Dorn an diese Folge von Domen angekoppelt wird.

Die Aufgabe wird mit den Domanschlussaggregat der eingangs genannten Art dadurch gelöst, dass das Domanschlussaggregat in Vorschubrichtung der Folgerichtung der Domen beweglich gelagerten und angetriebenen Basisschlitten, einen Antrieb für den Basisschlitten, eine auf dem Basisschlitten in Vorschubrichtung in Folge der Domen beweglichen gelagerten Ausgleichschlitten mit einem Dornkoppelglied, das zum Forttrieb jeweils eines anzuschließenden Domes und bei Vorschub des Basisschlittens zum Ankoppeln des anzuschließenden Domes an einen vorhergehenden Dorn eingerichtet ist und eine Steuerungseinrichtung für einen Antrieb des Basisschlittens hat. Die Steuerungseinrichtung ist eingerichtet, um einen anfänglichen beschleunigten Vorschub des Basisschlittens, der vor der Berührung des anzuschließenden Domes mit dem vorhergehenden Dorn in einen langsamen, an die Vorschubgeschwindigkeit des vorhergehenden Domes angepassten Vorschub übergeht, und einen abschließenden, in Abhängigkeit von der Auslenkung des Ausgleichschlittens in Bezug auf den Basisschlittens geregelten Vorschub des Basisschlittens zu bewirken.

Nach einer Phase der schnellen Annährung des anzuschließenden Doms an den vorhergehenden Dorn, die beispielsweise in Abhängigkeit eines durch Lichtschranken oder ähnlichem bestimmten Ausgangsabstand zwischen den Domen und einer Vorschubgeschwindigkeit bestimmt werden kann, erfolgt die letzte Annährung des anzuschließenden Doms an den vorhergehenden Dorn durch einen langsamen, an die Vorschubgeschwindigkeit des vorhergehenden Domes angepassten Vorschub. Eine nahezu stoßfreie Ankopplung wird erreicht, indem der anzuschließende Dorn mit Hilfe eines Ausgleichsschlitten vorgeschoben wird, der in Bezug auf einen ange-triebenen Basisschlitten relativ beweglich ist. Bei der Berührung der Dorne wird der aufgrund des Antriebs des Basisschlittens bewirkte Impuls von einem Ausgleichsschlitten aufgenommen und führt zu einer relativen Bewegung des Ausgleichsschlittens in Bezug auf den Basisschlitten. Dieser Impuls wird daher im Wesentlichen von Domen weitergeleitet.

Die Auslenkung des Ausgleichsschlittens in Bezug auf den Basisschlittens wird dann im Folgenden genutzt, um den Vorschub des Basisschlittens so zu regeln, dass eine nahezu stoßfreie Ankopplung der Dorne aneinander bewirkt wird.

Besonders vorteilhaft ist es, wenn der Basisschlitten mit dem Ausgleichsschlitten über ein Federelement, ein Dämpferelement oder ein Feder-Dämpfer-Element miteinander gekoppelt ist. Bevorzugt wird eine pneumatische Feder mit einer konstanten Federkonstanten eingesetzt. Hierdurch wird eine Gegenkraft auf den anzuschließenden Dorn bewirkt und ein vollständiges Auslenken des anzuschließenden Domes entgegen der Vorschubrichtung des Basisschlittens verhindert. Unregelmäßigkeiten beim Vortrieb werden auf der anderen Seite abgefedert bzw. gedämpft, um Stoßeinwirkungen auf die vorhergehenden Dorne zu verhindern.

Der Ausgleichsschlitten ist vorzugsweise auf Schienen beweglich gelagert, die parallel zur Vorschubrichtung der Folge von Domen ausgerichtet sind.

Die Relativbewegung zwischen Basisschlitten und Ausgleichsschlitten wird vorzugsweise durch einen mit dem Basisschlitten und Ausgleichsschlitten gekoppelten und mit der Steuerungseinheit verbundenen Sensor erfasst. Das Ausgangssignal dieses Sensors wird dann zur Regelung der Vorschubgeschwindigkeit des Basisschlittens genutzt. Als Sensor kann beispielsweise ein Positionssensor genutzt werden, der die Relativposition zwischen Basisschlitten und Ausgleichsschlitten bestimmt. Dies kann beispielsweise optisch, induktiv oder mit einem Schleifer erfolgen.

Das Dornkoppelglied am Ausgleichsschlitten kann beispielsweise einen Rotationsantrieb haben, mit dem durch Rotation des anzukoppelnden Domes eine Dornkupplung in eine korrespondierende Dornkupplung des vorhergehenden Domes eingekoppelt wird. Hierbei wird neben der Rotation des anzukoppelnden Domes die Vorschubbewegung genutzt, bei der sich der anzukoppelnde Dorn an den vorhergehenden Dorn annährt. Die Dornkopplung sollte für solch einen Fall als Steck-Kupplung mit Verdrehsicherung ausgebildet sein.

Es ist vorteilhaft, wenn ein in Vorschubrichtung der Folge von Domen verfahrbar gelagerter Domgreifer zur Erfassung und Führung des anzuschließenden Domes an einem dem Dornkoppelglied gegenüberliegenden Bereich des Domes vorgesehen ist. Mit Hilfe dieses Domgreifers wird der anzukoppelnde Dorn durch das Dornkoppelglied auf der einen Seite und dem Domgreifer auf der anderen Seite gehalten. Der Domgreifer kann hierbei beispielsweise im Bereich des dem vom Dornkoppelglied gehaltenen Anschlussende gegenüberliegenden Endes eingreifen. Es ist aber auch denkbar, dass der Domgreifer den anzuschließenden Dorn im mittleren Bereich des Domes hält. Durch den Domgreifer kann in Verbindung mit dem Dornkoppelglied des anzuschließenden Dorn in Vorschubrichtung ausgerichtet geführt werden.

Zur Erfassung des Domanfangs eines anzuschließenden Domes ist vorzugsweise ein mit der Steuerungseinheit verbundener Domsensor vorgesehen. Die Steuerungseinheit ist dann zur Steuerung des Antriebs für den Basisschlitten und des Domanschlussaggregates derart eingerichtet, dass der Domanfang vom Domanschlussaggregat ergriffen und in Abhängigkeit von seiner Relativposition zum Domende des vorhergehenden Domes herangeführt wird. Aus dem erkannten Domanfang des anzuschließenden Domes und dem beispielsweise aus der bekannten Vorschubgeschwindigkeit und der als Produktparameter im System bekannten Domlänge ermittelten Domendes und der sich hieraus ergebenden Distanz ist es möglich, die Annäherung des anzuschließenden Domes an den vorhergehenden Domes zu steuern. Bei der Feinannährung und der Ankopplung ist es jedoch nahezu unmöglich eine stoßfreie Ankopplung anhand einer unmittelbar detektierten Relativposition zu bewirken. Die Nutzung eines Ausgleichsschlittens und die Erfassung der Relativposition des Ausgleichsschlitten zum Basisschlittens und Nutzung derselben als Regelungssignal führt zur der gewünschten nahezu stoßfreien Ankopplung.

Die Zuführung der Dorne zu dem Domanschlussaggregat erfolgt vorzugsweise durch eine Querfördereinrichtung mit Förderelementen zur Förderung von Domen quer zur Längsrichtung der Dorne. Die Querfördereinrichtung ist dann in Bezug auf das Domanschlussaggregat so ausgerichtet, dass die quergeförderten Dorne von dem Domanschlussaggregat mindestens durch Ergreifen des Domanfang eines Domes durch das Dornkoppelglied übernehmbar sind.

Die Förderung der Dorne vom Ende der Fertigungsstraße zur Querfördereinrichtung und von dort zum Domanschlussaggregat, um die Dorne im Endlos-Prozess weiter zu verwenden, erfolgt vorzugsweise durch einen oder mehrere Muldenförderer. Die Muldenförderer haben Auflagerollen und mindestens einen auf den Auflagerrollen aufliegenden, antreibbar umlaufenden Endlosförderband, dessen Seitenkanten durch Leitbleche oder Rollen in Bezug auf den mittleren Auflagebereich für die Dorne zur Ausbildung einer Mulde hochgestellt sind. Die Dorne werden dann in dieser Mulde transportiert und durch das die Mulde bildenden Endlosförderband vorwärts bewegt.

Die Muldenförderer erstrecken sich in Transportrichtung vorzugsweise parallel zur Vorschubrichtung der Fertigungsstraße. Die Übergabe der Dorne vom Förderband der Fertigungsstraße in die Muldenförderer erfolgt mit Hilfe von Greifarmen zum Ergreifen der Dome, die so verfahrbar sind, dass die Dorne vom Ende der Fertigungsstraße in den Einlass eines Muldenförderers eingebracht werden können. In entsprechender Weise sind am Auslass des letzten Muldenförderers einer Folge von Muldenförderem Greifarme verfahrbar so angeordnet, dass die Dorne von dem Muldenförderer direkt oder über eine Querfördereinrichtung zum Domanschlussaggregat transportiert werden.

Es ist aber auch denkbar, dass die Muldenförderer auf einer Ebene mit dem Förderband der Fertigungsstraße angeordnet sind. Die Zu- und Abfuhr der Dorne in und aus den Muldenförderem kann dann mit Hilfe von ebenfalls Förderbänder oder Förderketten aufweisenden Querfördereinrichtungen erfolgen. Zum Einführen der Dorne in die Muldenförderer hat die Querfördereinrichtung dann einen Vorschubaktor.

Besonders vorteilhaft ist es jedoch, wenn die Muldenförderer auf einer anderen Ebene oberhalb der Ebene des Förderbandes der Fertigungsstraße angeordnet sind. Dann müssen die Dorne von der Förderebene der Fertigungsstraße in die Förderebene der Muldenförderer angehoben und am Ende der Muldenförderer von dieser Ebene der Muldenförderer auf die Förderebene des Domanschlussaggregates bzw. der davor gelagerten Querfördereinrichtung abgesenkt werden. Hierzu kann eine Vertikalfördereinrichtung vorgesehen sein. Die Vertikalfördereinrichtung hat vorzugsweise mindestens einen vertikal verfahrbaren Greifer mit Greifarmen zum Tragen der Dorne.

Besonders vorteilhaft ist es, wenn eine Mehrzahl von aufeinander folgenden Muldenförderer mit jeweils einem eigenen Antrieb, mindestens einem Sensor zur Erkennung eines in den Muldenförderer einlaufenden Doms und einer Steuerungseinheit derart, dass bei Erkennung eines einlaufenden Domes das Endlosförderband angetrieben wird, vorgesehen ist. Jeder dieser Muldenförderer arbeitet somit autark und wird dann betrieben, wenn das Einlaufen eines Domes erkannt wurde. Am Ende der Muldenförderer ist ein zweiter Sensor vorgesehen, um anhand des Domendes zu erkennen, dass ein Dorn den Muldenförderer verlassen hat und wieder einen neuen Dorn aufnehmen kann. Eine übergeordnete Steuerung ist nur erforderlich, um sicherzustellen, dass Dorne nicht aneinander stoßen. Hierzu kommunizieren die benachbarten Muldenförderer steuerungstechnisch miteinander. Diese autarken Muldenförderer haben zudem den Vorteil, dass die Fertigungsanlage modular erweiterbar oder änderbar ist, indem die Transportlänge durch Hinzufügen weiterer Muldenförderer oder Wegnehmen von Muldenförderem vergrößert oder verringert werden kann, ohne dass eine weitere Anpassung der Steuerung erforderlich ist. Bei einer solchen Anordnung mit Querfördereinrichtung und Muldenförderer ist es vorteilhaft, wenn mindestens eine Vertikal- oder Horizontal-Fördereinrichtung mit mindestens einem je nach Lage der Muldenförderer vertikal und/oder horizontal verfahrbaren Greifer zur Erfassung und Förderung von Domen quer zur Längsrichtung der Dorne vorgesehen ist. Die Vertikalförderung sollte dabei mindestens einen Sensor zur Erfassung in die Vertikal-/Horizontal-Förderung einlaufenden Domes haben und ebenfalls zur autarken Förderung der Dorne bei Erkennung eines einlaufenden Domes eingerichtet sein.

Vorzugsweise ist jeweils eine Vertikal-/Horizontal-Fördereinrichtung beim Einlauf und Auslauf des einen Muldenförderers oder der Folge von Muldenförderem angeordnet.

Um einen Transport von Domen mit unterschiedlichen Durchmessern ohne Umrüstzeit mit ein und demselben Greifer zu ermöglichen, haben die Greifer der mindestens einen Vertikal-/Horizontal-Fördereinrichtung vorzugsweise Greiferarme mit einem sich nach unten in Vertikalförderrichtung erstreckenden Halteabschnitt und einen sich mit einer Neigung daran anschließenden Auflageschenkel. Jeweils zwei Greiferarme sind spiegelsymmetrisch so zueinander ausgerichtet, dass die freien Enden der schräg stehenden Auflageschenkel aufeinander zuweisen. Mindestens einer der Greiferarme ist in eine Richtung quer zur Vertikalförderrichtung und quer zur Längsrichtung der zu fördernden Dorne verfahrbar, um Dorne aufzunehmen bzw. wieder freizugeben. Die Erfindung wird nachfolgend anhand der beigefügten Zeichnungen näher erläutert. Es zeigen:
- Figur 1 -: Skizze einer Fertigungseinrichtung für schlauchförmige Gebilde auf Domen mit einem Domanschlussaggregat und zugeordneten Fördereinrichtungen in der Draufsicht;
- Figur 2 -: Skizze eines Muldenförderers;
- Figur 3-: Skizze eines Vertikallförderers.

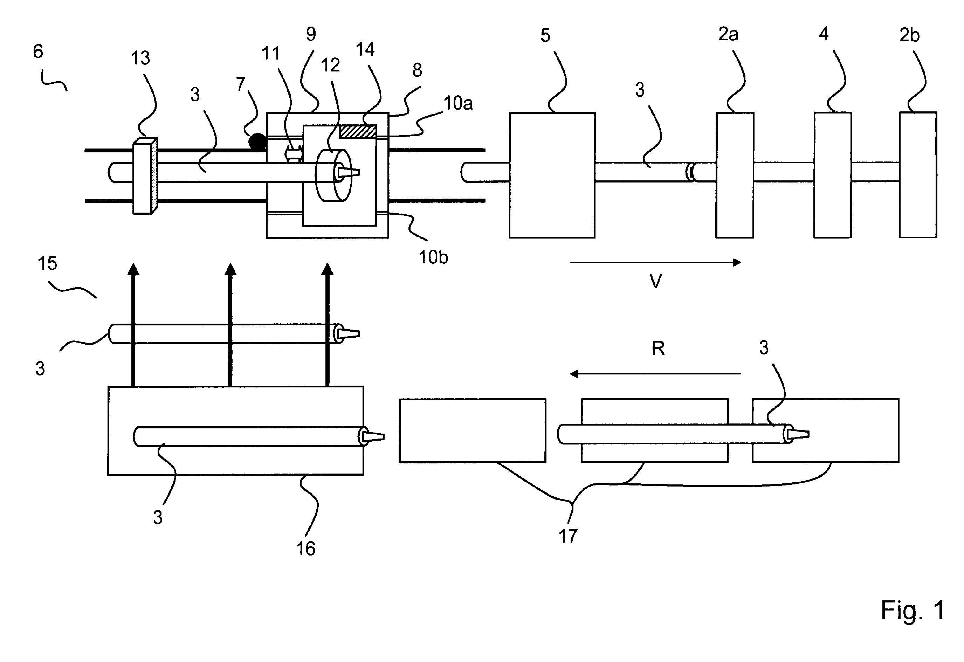

Figur 1 lässt eine Skizze einer Fertigungseinrichtung 1 zur Herstellung schlauchförmiger Gebilde erkennen. Dabei werden Gummischichten mit Hilfe von mindestens einem Extruder 2a, 2b in einem kontinuierlichen Prozess auf rohrförmige Dorne 3 aufextrudiert. Mit Hilfe einer Spiralisiervorrichtung 4 können Verstärkungsfäden zur Bildung eines Verstärkungsgewebes auf eine aufgetragene Gummischicht aufspiralisiert werden.

Der Vorschub der Folge von Domen 3 erfolgt mit einer Vorschubsantriebseinheit 5.

Um bei diesem kontinuierlichen Prozess neue Dorne 3 an die Folge der im Fertigungsprozess befindliche Dorne 3 stoßfrei anzukoppeln, ist ein Domanschlussaggregat 6 vorgesehen. Das Domanschlussaggregat 6 hat einen in Vorschubrichtung V der Folge von Domen 3 mit einem Antrieb 7 antreibbaren Basisschlitten 8. Relativ zu dem Basisschlitten 8 ist ein Ausgleichsschlitten 9 angeordnet, der relativ zum Basisschlitten 8 beweglich auf Schienen 10a, 10b des Basisschlittens 8 gelagert ist. Der Ausgleichsschlitten 9 ist mit einem Feder-Dämpfer-Element 11 mit dem Basisschlitten 8 gekoppelt.

Auf dem Basisschlitten 8 ist ein Dornkoppelglied 12 angeordnet, das zum Halten des an das Ende in der Fertigungseinrichtung 1 befindlichen Folge von Domen 3 befindlichen Ende des anzukoppelnden Domes 3 eingerichtet ist und einen entsprechenden Greifer hat. Das Dornkoppelglied 12 ist so eingerichtet, um angepasst an die spezielle Dornkupplung der verwendeten Dorne 3 eine Verrastung der Dornkupplung zu bewirken. Hierzu kann beispielsweise ein Rotationsantrieb vorgesehen sein, um die Dornkupplung mittels einer Rotations- und Vorschubbewegung in die korrespondierende Dornkupplung des vorhergehenden Domes 3 anzukuppeln.

Das gegenüberliegende Ende des Domes 3 wird durch einen Domgreifer 13 gehalten, der ebenfalls in Vorschubrichtung V verfahrbar ist.

Das Domanschlussaggregat 6 wird mit Hilfe geeigneter Sensoren gesteuert, die die Lage der anzukoppelnden Dorne 3 beispielsweise mit Hilfe von Lichtschranken erfassen. Die Ansteuerung des Domanschlussaggregats 6 und insbesondere des Antriebs 7 für den Basisschlitten 8 erfolgt mit Hilfe einer nicht dargestellten Steuerungseinheit derart, dass zunächst in Abhängigkeit von dem berechneten anfänglichen Abstand zwischen den anzukoppelnden Domenden der beiden aufeinander folgenden Dorne 3, der bekannten Länge der Dorne 3 und der bekannten Vorschubgeschwindigkeit der Folge von Domen 3 eine schnelle Annährung des anzukoppelnden Domes 3 an die bereits im Fertigungsprozess befindlichen Folge von Domen 3 erfolgt. Kurz vor der Berührung des anzukoppelnden Domes 3 mit dem vorhergehenden Dorn 3 wird die Vorschubgeschwindigkeit extrem verlangsamt und an die Vorschubgeschwindigkeit des vorhergehenden Domes 3 so angepasst, dass ein Stoß bei der Berührung vermieden wird. Bei der Berührung des anzukoppelnden Domes 3 und des vorhergehenden Domes 3 wird der durch den Stoß bewirkte Impuls durch Auslenkung des Ausgleichsschlittens 9 relativ zum Basisschlitten 8 aufgefangen. Der Ausgleichsschlitten 9 bewegt sich bei der langsamen Annährung entgegengesetzt zur Vorschubrichtung V. Das Feder-DämpfungsElement 11 sorgt für den nötigen Gegendruck. In Abhängigkeit von der Relativbewegung des Ausgleichsschlittens 9 zum Basisschlitten 8 bzw. den momentanen relativen Abstand des Ausgleichsschlittens 9 zum Basisschlitten 8 wird der Antrieb 7 des Basisschlittens 8 so angesteuert, dass eine stoßfreie langsame Annährung des anzukoppelnden Domes 3 an den vorhergehenden Dorn 3 erfolgt. Bei dieser Annährung beginnt dann auch der Ankoppelvorgang mit Hilfe des Dornkoppelgliedes 12. Die Relativbewegung des Ausgleichsschlittens 9 zum Basisschlitten 8 wird mit einem Sensor 14 gemessen, der vorzugsweise als Positionssensor ausgeführt ist und eine Verlagerung erkennt. Für die Zufuhr der anzukoppelnden Dorne 3 zu dem Domanschlussaggregat 6 ist eine Querfördereinrichtung 15 vorgesehen, die die Domen 3 quer zu ihrer Längsrichtung zum Domanschlussaggregat 6 befördern. Die Querfördereinrichtung 15 kann beispielsweise Endlosförderbänder als Förderelemente haben. Die Zufuhr der Dorne 3 zu der Querfördereinrichtung 15 erfolgt mit Hilfe einer Vertikal-Fördereinrichtung 16, die die Dorne 3 von oben senkrecht nach unten auf die Querfördereinrichtung 15 auflegt. Die Zufuhr der Dorne 3 zu der Vertikal-Fördereinrichtung 16 erfolgt mit Hilfe einer Folge von Muldenförderem 17, die die Dorne in Rückförderrichtung R entgegengesetzt zur Vorschubrichtung V des Fertigungsprozesses in Längsrichtung der Dorne 3 befördern.

Nicht dargestellt ist, dass am Ende des Fertigungsprozesses in gleicher Weise die Dorne 3 mittels Quer- und Vertikal-Fördereinrichtungen aufgenommen und zum Einlauf des ersten Muldenförderers der Folge von Muldenförderer 17 geschickt werden können, um in einem Endlosprozess einen automatischen Domentransport zu ermöglichen.

Für den Fall, dass die Muldenförderer 17 nicht parallel und oberhalb der Förderebene der Fertigungseinrichtung, beispielsweise unter der Decke, angeordnet sind, kann der Transport der Dorne von dem Ende der Fertigungseinrichtung zu dem Einlass der Folge von Muldenförderem 17 mit Hilfe einer Horizontal-Fördereinrichtung anstelle einer Vertikal-Fördereinrichtung erfolgen. Die Horizontalförderung kann dann mit Hilfe der skizzierten Querfördereinrichtung 15 realisiert werden. Es ist aber auch denkbar, dass anstelle oder ergänzend zu der Querfördereinrichtung 15 eine Horizontal-Fördereinrichtung mit Greifern vorgesehen ist, die zum Horizontaltransport der Dorne entsprechend verfahrbar sind. Zum Anheben und Absenken der Dorne 3 können die Greifer unter Umständen auch noch vertikal bewegt werden.

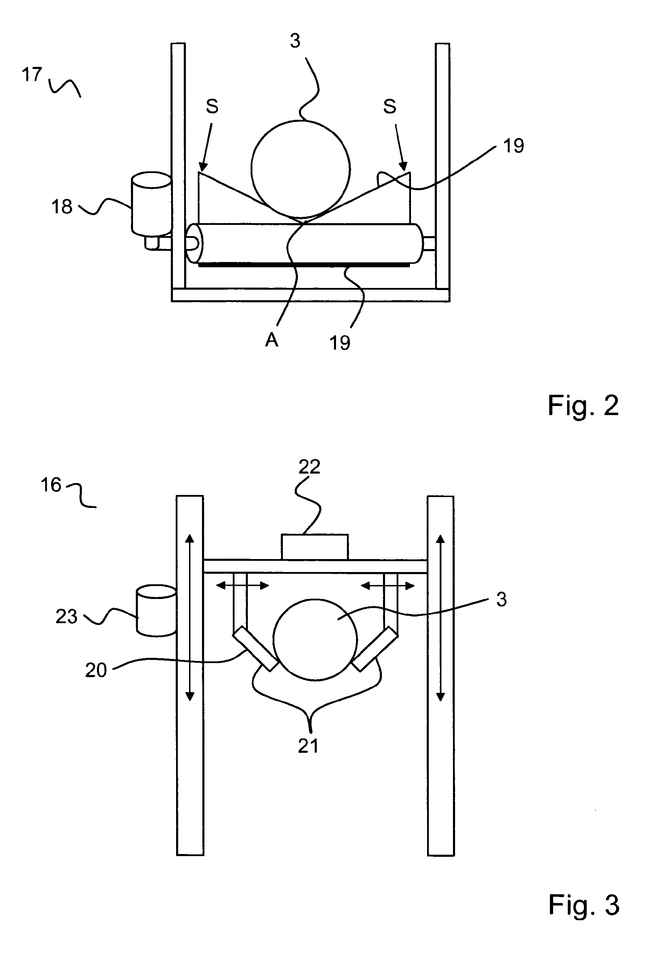

Figur 2 lässt eine Skizze eines Muldenförderers 17 erkennen, bei dem ein mit einem Muldenförderantrieb 18 angetriebenes Förderband 19 an seinen Seitenkanten S in Bezug auf einen mittleren Auflagebereich A hochgestellt ist. Auf diese Weise wird eine Mulde gebildet, in die die Dorne 3 eingelegt werden und mit Hilfe des Förderbandes 19 vorgeschoben werden. Ein solcher Muldenförderer 17 kann platzsparend an der Decke einer Fertigungshalle angebracht werden.

Die Muldenförderer 17 arbeiten jeweils autark und haben hierzu einen Sensor (nicht dargestellt), wie beispielsweise eine Lichtschranke, um einen einlaufenden Dorn 3 zu erkennen. Nach Erkennung eines Einlaufs eines Doms fährt der Muldenförderantrieb 18 an und befördert den Dorn 3 weiter. Sobald der Muldenförderer 17 wieder frei ist, stoppt der Muldenförderantrieb 18. Hierzu ist am Ende eines jeden Muldenförderers 17 ein Sensor vorgesehen, der das Domende detektiert und erkennt, wenn ein Dorn 3 den Muldenförderer 17 verlassen hat. Eine zentrale Steuerung und Synchronisation einer Folge von Muldenförderem 17 ist nicht erforderlich. Benachbarte Muldenförderer 17 sollten jedoch miteinander steuerungstechnisch kommunizieren, um eine Kollision von Domen 3 zu verhindern.

Figur 3 lässt eine Skizze einer Vertikalfördereinrichtung 16 erkennen, die einen vertikal verfahrbaren Greifer 20 hat. Die Greifer 20 haben zwei Greiferarme 21, die relativ zueinander mit Hilfe eines Greiferantriebs 22 aufeinander zu und voneinander weg bewegbar sind. Die Greiferarme 21 haben einen sich nach unten in Vertikalrichtung erstreckenden Halteabschnitt und einen sich mit einer Neigung daran anschließenden Auflageschenkel. Durch die spiegelsymmetrische Anordnung der Greiferarme 21 so zueinander, dass die freien Enden der schräg stehenden Auflageschenkel aufeinander zu weisen, können die Dorne 3 mit unterschiedlichen Durchmessern ergriffen werden, ohne dass eine Umrüstung erforderlich ist. Für das Verfahren der Greifer 20 in Vertikalrichtung von der Förderebene der Fertigungseinrichtung zur Förderebene der Muldenförderer 17 und zurück ist ein Vertikalförderantrieb 23 vorgesehen. Die Dorne 3 werden durch die Greifer 20 immer waagerecht gehalten und mit Hilfe des Vertikalförderantriebs 23 lediglich parallel von einer Förderebene zur anderen transportiert. Für den Fall, dass die Muldenförderer 17 auf derselben Ebene wie die Förderebene der Fertigungseinrichtung liegt, ist anstelle der Vertikalfördereinrichtung 16 eine Horizontalfördereinrichtung mit Horizontalförderantrieb vorgesehen. Denkbar ist aber auch eine kombinierte Vertikal- und Horizontalfördereinrichtung.

## Patentansprüche

1. Dornanschlussaggregat (6) zum Anschluss einer Folge von fortlaufenden rohrförmigen Domen (3) für eine Einrichtung zum Herstellen schlauchförmiger Gebilde durch Extrusion auf den Domen (3), **dadurch gekennzeichnet, dass** das Dornanschlussaggregat (6) einen in Vorschubrichtung (V) der Folge von Domen (3) beweglich gelagerten und angetriebenen Basisschlitten (8), einen Antrieb (7) für den Basisschlitten (8), einen auf dem Basisschlitten (8) in Vorschubrichtung (V) der Folge von Domen (3) beweglich gelagerten Ausgleichsschlitten (9) mit einem Dornkoppelglied (12), das zum Vortrieb jeweils eines anzuschließenden Domes (3) und bei Vorschub des Basisschlittens (8) zum Ankoppeln des anzuschließenden Domes an einen vorhergehenden Dom eingerichtet ist, und eine Steuerungseinrichtung für den Antrieb (7) des Basisschlittens (8) hat, wobei die Steuerungseinrichtung eingerichtet ist, um einen anfänglichen beschleunigten Vorschub des Basisschlittens (8), der vor der Berührung des anzuschließenden Domes (3) mit dem vohergehenden Dorn (3) in einen langsamen, an die Vorschubgeschwindigkeit des vorhergehenden Domes (3) angepassten Vorschub übergeht, und einen abschließenden, in Abhängigkeit von der Auslenkung des Ausgleichsschlittens (9) in Bezug auf den Basisschlitten (8) geregelten Vorschub des Basisschlittens (8) zu bewirken.

2. Dornanschlussaggregat (6) nach Anspruch 1, **dadurch gekennzeichnet, dass** der Basisschlitten (8) mit dem Ausgleichsschlitten (9) mit einem Federelement, einem Dämpferelement oder einem Feder-Dämpfer-Element (11) verbunden ist.

3. Dornanschlussaggregat (6) nach Anspruch 1 oder 2, **dadurch gekennzeichnet, dass** der Ausgleichsschlitten (9) auf parallel zueinander in Vorschubrichtung (V) der Folge von Domen (3) ausgerichteten Schienen (10a, 10b) beweglich gelagert ist.

4. Dornanschlussaggregat (6) nach einem der vorhergehenden Ansprüche, **gekennzeichnet durch** einen mit dem Basisschlitten (8) und Ausgleichsschlitten (9) gekoppelten und mit der Steuerungseinheit verbundenen Sensor (14) zur Erfassung der Relativbewegung zwischen Basisschlitten (8) und Ausgleichsschlitten (9).

5. Dornanschlussaggregat (6) nach Anspruch 4, **dadurch gekennzeichnet, dass** der Sensor (14) ein Positionssensor oder ein Beschleunigungssensor ist.

6. Dornanschlussaggregat (6) nach einem der vorhergehenden Ansprüche, **dadurch gekennzeichnet, dass** das Dornkoppelglied einen Rotationsantrieb hat, um durch Rotation des anzukoppelnden Domes (3) eine Dornkupplung mittels einer Rotations- und Vorschubbewegung in eine korrespondierende Dornenkupplung des vorhergehenden Domes (3) einzukoppeln.

7. Dornanschlussaggregat (6) nach einem der vorhergehenden Ansprüche, **gekennzeichnet durch** einen in Vorschubrichtung (V) der Folge von Domen (3) verfahrbar gelagerten Dornengreifer (13) zur Erfassung und Führung des anzuschließenden Domes (3) an einem dem Dornkoppelglied (12) gegenüberliegenden Bereich des Domes (3).

8. Dornanschlussaggregat (6) nach einem der vorhergehenden Ansprüche, **gekennzeichnet durch** einen mit der Steuerungseinheit verbundenen Domsensor, wobei die Steuerungseinheit zur Steuerung des Antriebs für den Basisschlitten (8) und des Dornanschlussaggregates (6) derart eingerichtet ist, dass der Domanfang vom Dornkoppelglied (12) ergriffen und in Abhängigkeit von seiner Relativposition zum Domende des vorhergehenden Dornes (3) an das Dornende herangeführt wird.

9. Dornanschlussaggregat (6) nach einem der vorhergehenden Ansprüche, **gekennzeichnet durch** eine Querfördereinrichtung (15) mit Förderelementen zur Förderung von Domen (3) quer zur Längsrichtung der Dome (3), wobei die Querfördereinrichtung (15) in Bezug auf das Dornanschlussaggregat (6) so ausgerichtet ist, dass die quer geförderten Dorne (3) von dem Domanschlussaggregat (6) mindestens **durch** Ergreifen des Dornanfangs eines Domes (3) **durch** das Dornkoppelglied (12) übernehmbar sind.

10. Dornanschlussaggregat (6) nach Anspruch 9, **gekennzeichnet durch** einen oder mehreren oberhalb der Querfördereinrichtung (15) angeordneten Muldenförderer (17) mit Auflagerollen und mit mindestens einem auf den Auflagerollen aufliegenden, antreibbaren umlaufenden Endlosförderband (19), dessen Seitenkanten (S) in Bezug auf den mittleren Auflagebereich (A) für die Dome zur Ausbildung einer Mulde hochgestellt sind.

11. Dornanschlussaggregat (6) nach Anspruch 9, **dadurch gekennzeichnet, dass** eine Mehrzahl von aufeinander folgenden Muldenförderern (17) mit jeweils einem eigenen Antrieb, mindestens einem Sensor (14) zur Erkennung eines in den Muldenförderer (17) einlaufenden Doms und einer Steuerungseinheit für den Antrieb (7) derart, dass bei Erkennung eines einlaufenden Domes (3) das Endlosförderband (19) angetrieben wird, vorgesehen ist.

12. Dornanschlussaggregat (6) nach einem der Ansprüche 9 bis 11, **gekennzeichnet durch** mindestens eine Vertikal- und/oder Horizontal-Fördereinrichtung (16) mit mindestens einem vertikal und/oder horizontal verfahrbaren Greifer (20) zur Erfassung und Förderung von Domen (3) quer zur Längsrichtung der Dome (3).

13. Dornanschlussaggregat (6) nach Anschluss 12, **dadurch gekennzeichnet, dass** die Vertikal- und/oder Horizontal-Fördereinrichtung (16) mindestens einen Sensor (14) zur Erkennung eines in die Vertikal- und/oder Horizontal-Fördereinrichtung (16) einlaufenden Domes (3) hat und zur autarken Förderung der Dome (3) bei Erkennung eines einlaufenden Domes (3) eingerichtet ist.

14. Dornanschlussaggregat (6) nach Anspruch 12 oder 13, **dadurch gekennzeichnet, dass** jeweils eine Vertikal-/Horizontal-Fördereinrichtung (16) am Einlauf und am Auslauf des einen Muldenförderers (17) oder der Folge von Muldenförderern (17) angeordnet ist.

15. Dornanschlussaggregat (6) nach eine der Ansprüche 12 bis 14, **dadurch gekennzeichnet, dass** die Greifer (20) der mindestens einen Vertikal-/Horizontal-Fördereinrichtung (16) Greiferarme (21) mit einem sich nach unten in Vertikalförderrichtung erstreckenden Halteabschnitt und einem sich mit einer Neigung daran anschließenden Auflageschenkel hat, jeweils zwei Greiferarme (21) spiegelsymmetrisch so zueinander ausgerichtet sind, dass die freien Enden der schräg stehenden Auflageschenkel aufeinander zu weisen, und dass mindestens einer der Greiferarme (21) in eine Richtung quer zur Vertikalförderrichtung und quer zur Längsrichtung der zu fördernden Dome (3) verfahrbar ist.

## Claims

1. Mandrel connecting unit (6) for connecting a sequence of continuous tubular mandrels (3) for a device for producing hose-like structures by extrusion on the mandrels (3), **characterized in that** the mandrel connecting unit (6) has a base carriage (8) which is mounted so as to be movable, and is driven, in the feed direction (V) of the sequence of mandrels (3), a drive (7) for the base carriage (8), a compensating carriage (9) which is mounted to be movable on the base carriage (8) in the feed direction (V) of the sequence of mandrels (3) and which has a mandrel coupling element (12) which is designed to advance in each case one mandrel (3) to be connected and, upon a feed movement of the base carriage (8), to couple the mandrel to be connected to a preceding mandrel, and a control device for the drive (7) of the base carriage (8), the control device being designed to generate an initially accelerated feed movement of the base carriage (8), which feed movement is adjusted to a slow feed movement matched to the feed speed of the preceding mandrel (3) before the mandrel (3) to be connected comes into contact with the preceding mandrel (3), and a final feed movement of the base carriage (8) regulated as a function of the deflection of the compensating carriage (9) in relation to the base carriage (8).

2. Mandrel connecting unit (6) according to Claim 1, **characterized in that** the base carriage (8) is connected to the compensating carriage (9) by means of a spring element, a damper element or a spring-damper element (11).

3. Mandrel connecting unit (6) according to Claim 1 or 2, **characterized in that** the compensating carriage (9) is mounted so as to be movable on rails (10a, 10b) aligned parallel to one another in the feed direction (V) of the sequence of mandrels (3).

4. Mandrel connecting unit (6) according to one of the preceding claims, **characterized by** a sensor (14), which is coupled to the base carriage (8) and compensating carriage (9) and connected to the control unit, for measuring the relative movement between the base carriage (8) and compensating carriage (9).

5. Mandrel connecting unit (6) according to Claim 4, **characterized in that** the sensor (14) is a position sensor or an acceleration sensor.

6. Mandrel connecting unit (6) according to one of the preceding claims, **characterized in that** the mandrel coupling element has a rotary drive in order, by rotating the mandrel (3) to be coupled, to couple a mandrel coupling into a corresponding mandrel coupling of the preceding mandrel (3) by means of a rotational and feed movement.

7. Mandrel connecting unit (6) according to one of the preceding claims, **characterized by** a mandrel gripper (13), which is mounted so as to be movable in the feed direction (V) of the sequence of mandrels (3), for gripping and guiding the mandrel (3) to be connected to a region of the mandrel (3) situated opposite the mandrel coupling element (12).

8. Mandrel connecting unit (6) according to one of the preceding claims, **characterized by** a mandrel sensor which is connected to the control unit, wherein the control unit is designed to control the drive for the base carriage (8) and to control the mandrel connecting unit (6) in such a way that the mandrel start is gripped by the mandrel coupling element (12) and, as a function of the relative position thereof in relation to the mandrel end of the preceding mandrel (3), is brought closer to the mandrel end.

9. Mandrel connecting unit (6) according to one of the preceding claims, **characterized by** a transverse conveying device (15) with conveying elements for conveying mandrels (3) transversely with respect to the longitudinal direction of the mandrels (3), the transverse conveying device (15) being aligned in relation to the mandrel connecting unit (6) such that the transversely conveyed mandrels (3) can be transferred to the mandrel connecting unit (6) at least by virtue of the mandrel start of a mandrel (3) being gripped by the mandrel coupling element (12).

10. Mandrel connecting unit (6) according to Claim 9, **characterized by** one or more trough-type conveyers (17) which are arranged above the transverse conveying device (15) and which have support rollers and at least one encircling endless conveying belt (19) which is supported on the support rollers and can be driven, the side edges (S) of which endless conveyor belt (19) are elevated in relation to the central support region (A) for the mandrels, such that a trough is formed.

11. Mandrel connecting unit (6) according to Claim 9, **characterized in that** a multiplicity of successive trough-type conveyors (17) is provided which each have a separate drive, at least one sensor (14) for detecting a mandrel running into the trough-type conveyor (17), and a control unit for the drive (7), such that the endless conveyor belt (19) is driven when a running-in mandrel (3) is detected.

12. Mandrel connecting unit (6) according to one of Claims 9 to 11, **characterized by** at least one vertical and/or horizontal conveying device (16) with at least one vertically and/or horizontally movable gripper (20) for gripping and conveying mandrels (3) transversely with respect to the longitudinal direction of the mandrels (3).

13. Mandrel connecting unit (6) according to Claim 12, **characterized in that** the vertical and/or horizontal conveying device (16) has at least one sensor (14) for detecting a mandrel (3) running into the vertical and/or horizontal conveying device (16), and is designed to autarkically convey the mandrels (3) when a running-in mandrel (3) is detected.

14. Mandrel connecting unit (6) according to Claim 12 or 13, **characterized in that** in each case one vertical/horizontal conveying device (16) is arranged at the entry and at the exit of the one trough-type conveyor (17) or sequence of trough-type conveyors (17).

15. Mandrel connecting unit (6) according to one of Claims 12 to 14, **characterized in that** the gripper (20) of the at least one vertical/horizontal conveying device (16) has gripper arms (21) with a holding section, which extends downward in the vertical conveying direction, and with a support limb adjoining said holding section at an angle of inclination, in each case two gripper arms (21) being aligned mirror-symmetrically with respect to one another such that the free ends of the oblique support limbs point towards one another, and **in that** at least one of the gripper arms (21) can be moved in a direction transversely to the vertical conveying direction and transversely to the longitudinal direction of the mandrels (3) to be conveyed.

## Revendications

1. Appareil de raccordement de broches (6) pour le raccordement d'une série de broches (3) de forme tubulaire successives pour un dispositif de fabrication de structures en forme de tuyaux par extrusion sur les broches (3), **caractérisé en ce que** l'appareil de raccordement de broches (6) présente un chariot de base (8) monté mobile et entraîné dans la direction d'avance (V) de la série de broches (3), un entraînement (7) pour le chariot de base (8), un chariot d'équilibrage (9) monté mobile sur le chariot de base (8) dans la direction d'avance (V) de la série de broches (3), avec un organe d'accouplement de broches (12), qui est prévu pour faire avancer à chaque fois une broche (3) à raccorder et, lors de l'avance du chariot de base (8), pour accoupler la broche à raccorder à une broche précédente, et un dispositif de commande pour l'entraînement (7) du chariot de base (8), le dispositif de commande étant prévu pour provoquer une avance initialement accélérée du chariot de base (8), qui se transforme en une avance lente, adaptée à la vitesse d'avance de la broche précédente (3), et une avance finale du chariot de base (8), réglée en fonction de la déviation du chariot d'équilibrage (9) par rapport au chariot de base (8).

2. Appareil de raccordement de broches (6) selon la revendication 1, **caractérisé en ce que** le chariot de base (8) est connecté au chariot d'équilibrage (9) par un élément de ressort, un élément amortisseur ou un élément de ressort-amortisseur (11).

3. Appareil de raccordement de broches (6) selon la revendication 1 ou 2, **caractérisé en ce que** le chariot d'équilibrage (9) est monté mobile sur des rails (10a, 10b) orientés parallèlement l'un à l'autre dans la direction d'avance (V) de la série de broches (3).

4. Appareil de raccordement de broches (6) selon l'une quelconque des revendications précédentes, **caractérisé par** un capteur (14) accouplé au chariot de base (8) et au chariot d'équilibrage (9) et connecté à l'unité de commande pour détecter le mouvement relatif entre le chariot de base (8) et le chariot d'équilibrage (9).

5. Appareil de raccordement de broches (6) selon la revendication 4, **caractérisé en ce que** le capteur (14) est un capteur de position ou un capteur d'accélération.

6. Appareil de raccordement de broches (6) selon l'une quelconque des revendications précédentes, **caractérisé en ce que** l'organe d'accouplement de broches a un entraînement en rotation afin d'accoupler par la rotation de la broche à accoupler (3) un accouplement de broches au moyen d'un mouvement de rotation et d'avance dans un accouplement de broches correspondant de la broche précédente (3).

7. Appareil de raccordement de broches (6) selon l'une quelconque des revendications précédentes, **caractérisé par** un dispositif de préhension de broches (13) monté de manière déplaçable dans la direction d'avance (V) de la série de broches (3), pour saisir et guider la broche à raccorder (3) sur une région de la broche (3) opposée à l'organe d'accouplement de broches (12).

8. Appareil de raccordement de broches (6) selon l'une quelconque des revendications précédentes, **caractérisé par** un capteur de broche connecté à l'unité de commande, l'unité de commande étant prévue pour commander l'entraînement pour le chariot de base (8) et l'appareil de raccordement de broches (6) de telle sorte que le début d'une broche soit saisi par l'organe d'accouplement de broches (12) et soit rapproché de l'extrémité de broche en fonction de sa position relative par rapport à l'extrémité de broche de la broche précédente (3).

9. Appareil de raccordement de broches (6) selon l'une quelconque des revendications précédentes, **caractérisé par** un dispositif de transport transversal (15) avec des éléments de transport pour le transport de broches (3) transversalement à la direction longitudinale des broches (3), le dispositif de transport transversal (15) étant orienté par rapport à l'appareil de raccordement de broches (6) de telle sorte que les broches (3) transportées transversalement puissent être reprises par l'appareil de raccordement de broches (6) au moins par préhension du début de broche d'une broche (3) par l'organe d'accouplement de broches (12).

10. Appareil de raccordement de broches (6) selon la revendication 9, **caractérisé par** un ou plusieurs dispositifs de transport en creux (17) disposés au-dessus du dispositif de transport transversal (15), avec des rouleaux d'appui et avec au moins une bande transporteuse sans fin (19) pouvant être entraînée en circulation et reposant sur les rouleaux d'appui, dont les arêtes latérales (S) sont relevées par rapport à la région d'appui centrale (A) pour les broches afin de créer un creux.

11. Appareil de raccordement de broches (6) selon la revendication 9, **caractérisé en ce qu'**il est prévu une pluralité de dispositifs de transport en creux (17) successifs, ayant à chaque fois un entraînement propre, au moins un capteur (14) pour détecter une broche entrant dans le dispositif de transport en creux (17) et une unité de commande pour l'entraînement (7), de telle sorte qu'à la détection de l'arrivée d'une broche (3), la bande transporteuse sans fin (19) soit entraînée.

12. Appareil de raccordement de broches (6) selon l'une quelconque des revendications 9 à 11, **caractérisé par** au moins un dispositif de transport vertical et/ou horizontal (16) avec au moins un dispositif de préhension déplaçable verticalement et/ou horizontalement (20) pour saisir et transporter des broches (3) transversalement à la direction longitudinale des broches (3).

13. Appareil de raccordement de broches (6) selon la revendication 12, **caractérisé en ce que** le dispositif de transport vertical et/ou horizontal (16) présente au moins un capteur (14) pour détecter l'arrivée d'une broche (3) dans le dispositif de transport vertical et/ou horizontal (16), et est prévu pour transporter de manière autonome les broches (3) à la détection de l'arrivée d'une broche (3).

14. Appareil de raccordement de broches (6) selon la revendication 12 ou 13, **caractérisé en ce qu'**un dispositif de transport vertical et/ou horizontal (16) respectif est disposé à l'entrée et à la sortie de l'un des dispositifs de transport en creux (17) ou de la série de dispositifs de transport en creux (17).

15. Appareil de raccordement de broches (6) selon l'une quelconque des revendications 12 à 14, **caractérisé en ce que** les dispositifs de préhension (20) de l'au moins un dispositif de transport vertical et/ou horizontal (16) présentent des bras de préhension (21) avec une portion de retenue s'étendant vers le bas dans la direction de transport verticale et une branche d'appui s'y raccordant suivant une certaine inclinaison, à chaque fois deux bras de préhension (21) étant orientés avec une symétrie spéculaire l'un par rapport à l'autre, de telle sorte que les extrémités libres de la branche d'appui oblique soient tournées l'une vers l'autre, et **en ce qu'**au moins l'un des bras de préhension (21) peut être déplacé dans une direction transversale par rapport à la direction de transport verticale et transversale par rapport à la direction longitudinale des broches (3) à transporter.
